# EUROPEAN PATENT SPECIFICATION

(11) **EP 4 555 464 B1**
(45) Date of publication and mention of the grant of the patent: **12.11.2025**
(21) Application number: 24743437.6
(22) Date of filing: 26.06.2024
(51) Int. Cl.: G06Q 10/08, G06Q 10/083, G06Q 10/30, G06Q 50/08

(54) **RECYCLING CONCRETE**
RECYCLING VON BETON
RECYCLAGE DE BÉTON

(30) Priority: 04.07.2023 FI 20235788
(43) Date of publication of application: 21.05.2025
(73) Proprietor: Grind 0 Oy, 04300 Tuusula (FI)
(72) Inventor: HARJUMÄKI, Miro, 04300 Tuusula (FI); KÄÄRIÄINEN, Kalle, 04300 Tuusula (FI)
(74) Representative: Berggren Oy
(86) International application number: PCT/FI2024/050352
(87) International publication number: WO 2025/008569

(56) References cited:
- WO-A1-2022/260763
- KR-A- 20230 067 055
- US-A1- 2014 214 715

## Description

### Technical Field

The present solution generally relates to methods, apparatuses, computer program products, and a system for recycling concrete.

### Background

Concrete is one of the most widely used materials in the world, and roughly 6 % of the carbon dioxide emissions produced by humans originate from the concrete industry. Approximately 4 to 6 % of all concrete is wasted. Waste concrete is produced both at concrete production plants and at constructions sites. The pouring time of mixed concrete is relatively short, usually about 120 minutes. After this time has elapsed, the concrete is no longer usable and is usually discarded as waste. Due to its high pH, concrete is harmful to the environment, and it is considered difficult to recycle. Significant efforts have been put into improving existing concrete recycling methods in many western countries, but there remains room for improvement.

### Summary of the Invention

The scope of protection sought for various embodiments of the invention is set out by the independent claims. Various embodiments are disclosed in the dependent claims. The embodiments and features, if any, described in this specification that do not fall under the scope of the independent claims are to be interpreted as examples useful for understanding various embodiments of the invention.

A first method comprises: obtaining information on a recyclable ready-mix concrete, RMC, surplus, the information including a location of the RMC surplus and an amount of the RMC surplus; transmitting a RMC recycling request comprising the information of the recyclable RMC surplus to a server; receiving, from the server, information on one or more aggregate delivery sites capable of receiving the RMC surplus converted into aggregate, the

### Technical Field

The present solution generally relates to methods, apparatuses, computer program products, and a system for recycling concrete.

### Background

Concrete is one of the most widely used materials in the world, and roughly 6 % of the carbon dioxide emissions produced by humans originate from the concrete industry. Approximately 4 to 6 % of all concrete is wasted. Waste concrete is produced both at concrete production plants and at constructions sites. The pouring time of mixed concrete is relatively short, usually about 120 minutes. After this time has elapsed, the concrete is no longer usable and is usually discarded as waste. Due to its high pH, concrete is harmful to the environment, and it is considered difficult to recycle. Significant efforts have been put into improving existing concrete recycling methods in many western countries, but there remains room for improvement.

WO 2022/260763 A1 discloses methods of operating and instructing concrete mixer truck having re-use concrete after unload. US 2014/214715 A1 discloses a scheduling system and method for distribution of perishable loads of pre-mixed concrete to multiple sites. KR 2023 0067055 discloses AI automatic allocation and tracking system for recycled aggregate using artificial intelligence.

### Summary of the Invention

The scope of protection sought for various embodiments of the invention is set out by the independent claims. Various embodiments are disclosed in the dependent claims. The embodiments and features, if any, described in this specification that do not fall under the scope of the independent claims are to be interpreted as examples useful for understanding various embodiments of the invention.

A first method comprises: obtaining information on a recyclable ready-mix concrete, RMC, surplus, the information including a location of the RMC surplus and an amount of the RMC surplus; transmitting a RMC recycling request comprising the information of the recyclable RMC surplus to a server; receiving, from the server, information on one or more aggregate delivery sites capable of receiving the RMC surplus converted into aggregate, the information including one or more locations of the one or more aggregate delivery sites; and outputting at least one of the one or more locations.

The first method may further comprise computing, based on the location of the RMC surplus and the one or more locations of the one or more aggregate delivery sites, one or more routes from the location of the RMC surplus to the one or more locations of the one or more aggregate delivery sites; and outputting the computed one or more routes.

The first method may further comprise selecting an aggregate delivery site from the one or more aggregate delivery sites capable of receiving the RMC surplus, based on distances between a predetermined target location and the one or more locations of the one or more aggregate delivery sites and between the location of the RMC surplus and the one or more locations of the one or more aggregate delivery sites; and outputting the location of the selected aggregate delivery site.

The first method may further comprise measuring the location of the RMC surplus by at least one position sensor, and transmitting the measured location in the RMC recycling request.

A user device comprises at least one processor, at least one memory including computer program code, the at least one memory and the computer program code configured to, with the at least one processor, cause the user device to perform the first method.

A computer program product comprises computer program code configured to, when executed by at least one processor, cause an apparatus to perform the first method.

A second method comprises: receiving, from a user device, a ready-mix concrete, RMC, recycling request comprising information on a recyclable RMC surplus, the information including a location of the RMC surplus and an amount of the RMC surplus; searching, using the location of the RMC surplus and the amount of the RMC surplus, a database for one or more aggregate delivery sites capable of receiving the RMC surplus converted into aggregate, wherein the database is configured to store locations of aggregate delivery sites and amounts of aggregate requested by the aggregate delivery sites; retrieving information of the one or more aggregate delivery sites from the database; and transmitting the information on the one or more aggregate delivery sites to the user device, the information including the locations of the one or more aggregate delivery sites.

The second method may further comprise receiving an aggregate delivery request comprising a location of an aggregate delivery site and an amount of aggregate requested; storing the location of the aggregate delivery site and the amount of aggregate requested in the database.

The second method may further comprise comparing the location of the RMC surplus to the locations of the aggregate delivery sites stored in the database; and if the location of the RMC surplus and the location of an aggregate delivery site are not within a predetermined distance, determining the aggregate delivery site as incapable of receiving the RMC surplus.

The second method may further comprise comparing the amount of the RMC surplus to the amounts of aggregate requested by the aggregate delivery sites stored in the database; and if the amount of the RMC surplus is greater than the amount of aggregate requested by an aggregate delivery site, determining the aggregate delivery site as incapable of receiving the RMC surplus.

The second method may further comprise receiving, from the user device, a confirmation message indicating which one of the one or more aggregate delivery sites was selected by a user of the user device; in response to receiving the confirmation message, decreasing the amount of aggregate requested by the selected aggregate delivery site stored in the database by the amount of the RMC surplus.

A server comprises at least one processor, at least one memory including computer program code, the at least one memory and the computer program code configured to, with the at least one processor, cause the server to perform the second method.

A computer program product comprises computer program code configured to, when executed by at least one processor, cause an apparatus to perform the second method.

A system for ready-mix concrete, RMC, recycling comprises one or more user devices and at least one server.

A third method for recycling ready-mix concrete, RMC, comprises: treating a recyclable RMC surplus with an aggregating additive to convert the RMC surplus into aggregate; operating the user device by providing at least an amount of the RMC surplus to the user device to obtain a location an aggregate delivery site from the user device; and transporting the aggregate to the location of the aggregate delivery site.

### Brief Description of the Drawings

FIG. 1 shows an embodiment of a system according to the invention;
FIG. 2 is a flow chart illustrating an embodiment of a method performed by a user device;
FIG. 3 is a flow chart illustrating an embodiment of a method performed by a server;
FIG. 4 is a flow chart illustrating an embodiment of a method of recycling concrete; and
FIG. 5 is a block diagram depicting embodiments of an apparatus.

### Detailed Description of the Invention

The invention relates to recycling concrete, preferably ready-mix concrete (RMC). Ready-mix concrete refers to concrete in plastic form, prepared at e.g. a concrete mixing plant. It is usually transported in the plastic form by a transit-mixer to be used at a site. The invention provides technical effects of reducing the environmental impacts of concrete production and its use in construction.

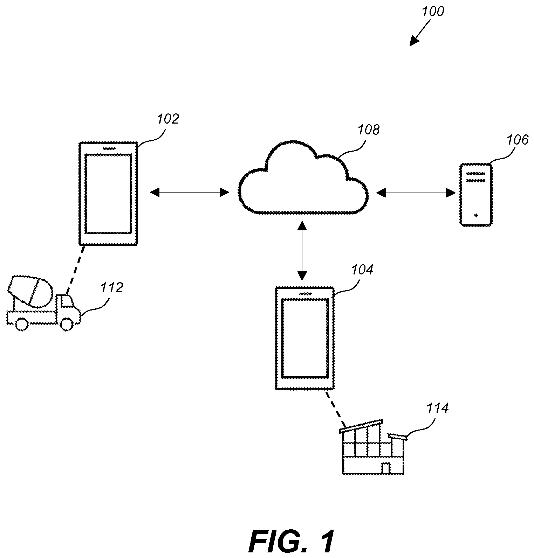

FIG. 1 is depicts an embodiment of a system 100 according to the invention. The system 100 comprises a plurality of user devices including a first user device 102 and a second user device 104 and a server computer 106. The user devices and the server communicate via a network 108. The network preferably comprises a wireless network, such as a cellular network that e.g. provides a connection to the Internet. Alternatively or additionally, the network 108 may comprise a wired network.

In the embodiment of FIG. 1, the user devices are smartphones. However, any other type of computing device is also suitable, and mobile computing devices are preferable. Each user device may be one of the following: a smartphone, a tablet computer, a phablet, a smart watch, a laptop computer, a desktop computer, or an integrated user device forming a part of a user interface of e.g. a vehicle, for example. The user devices 102, 104 do not need to be of the same type; for example, the first user device 102 may be a smartphone and the second user device 104 may be a tablet computer.

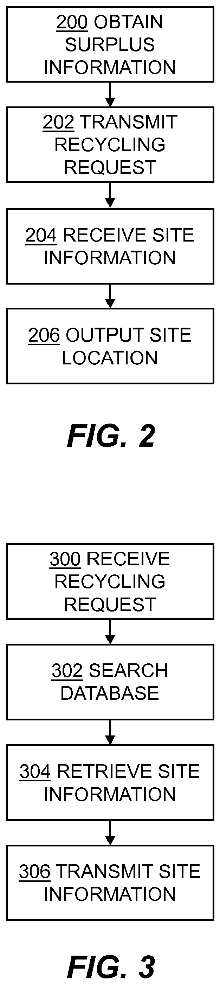

The server computer 106 may be a general-purpose computer, or it may be dedicated hardware, or a virtual machine. The server computer 106 may be located in a data center and accessible via the network 108. The server may execute the method of FIG. 3 (described in more detail below) as a containerized application using operating system (OS) -level virtualization.

In an example scenario, a first user device 102 belongs to the driver of a concrete truck 112. The first user device 102 may be integrated to the concrete truck 112 e.g. as a part of the user interface of the truck 112. The concrete truck 112 is given the task of delivering concrete to a first construction site, and after the pouring time of the concrete has passed, dealing with the waste concrete still left in the truck.

In the example scenario, the second user device 104 belongs to a construction site manager of a second construction site 114 that is different from the first construction site. The second construction site 114 has a demand for aggregate for use in place of rock material in earth construction, for example. Alternatively, if the second site 114 is or has a concrete mixing plant, the aggregate can be used for producing further (ready-mix) concrete.

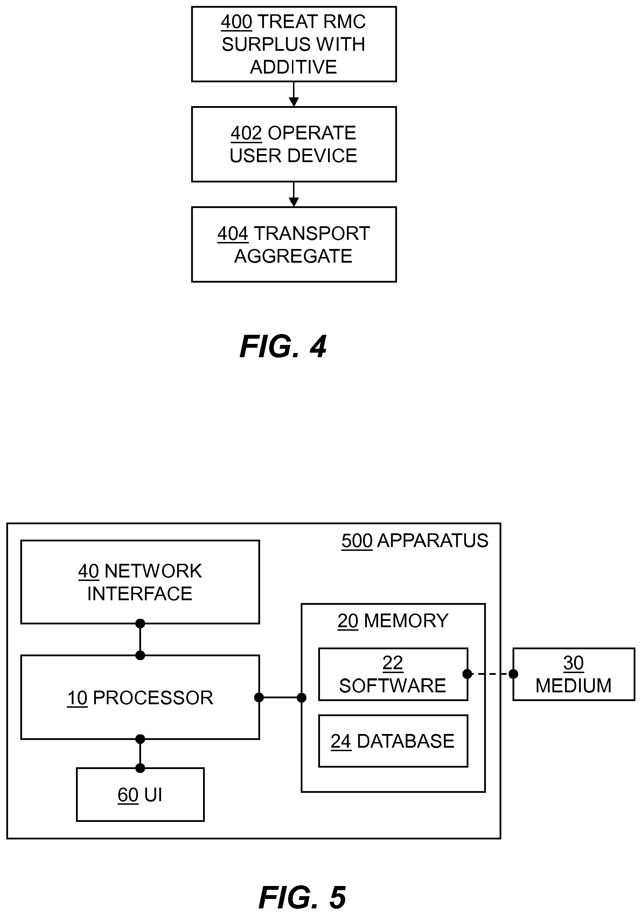

The operation of the system and its components in the example scenario will now be described with reference to the flow charts of FIG. 2, FIG. 3 and FIG. 4. FIG. 2 illustrates an embodiment of a method performed by the first user device 102. FIG. 3 illustrates an embodiment of a method performed by the server computer 106. FIG. 4 illustrates an embodiment of a method performed using the first user device 102 by e.g. the driver of the concrete truck 112.

Prior to the example scenario, the user of the second user device 104 (i.e. the construction site manager) inputs an amount of aggregate requested at the site 114 to the second user device 104 via a user interface of the second user device 104. The construction site manager may also input, via the user interface, a location of the aggregate delivery site (i.e. the location of the second construction site 114), for example, in the form of an address of the site 114. Alternatively, if the second user device 104 comprises at least one position sensor configured to measure the location of the second user device 104, the second user device 104 may obtain a location of the aggregate delivery site using the at least one position sensor. Example position sensors include satellite positioning sensors, such as Global Positioning System (GPS) sensors, but other position sensors known to the skilled person are also suitable.

The second user device 104 then generates an aggregate delivery request comprising the location of the aggregate delivery site 114 and the amount of aggregate requested at the site 114. The second user device 104 transmits the aggregate delivery request to the server 106 via the network 108. The server 106 receives the aggregate delivery request and stores the location and amount included in the request to a database.

The database is configured to store locations of different aggregate delivery sites, including site 114, and amounts of aggregate requested by the different aggregate delivery sites. The database itself may be stored e.g. in a memory of the server computer 106 and/or on one or more devices accessible to the server via the network 108.

In the example scenario, after delivering concrete to the first construction site, there is still a surplus of unhardened RMC in the concrete truck 112. The driver of the concrete truck 112 treats 400 (see FIG. 4) the RMC surplus with an aggregating additive to convert the RMC surplus into aggregate. An example of a suitable aggregating additive is Re-Con Zero, a two-component powder product made from polymers and inorganic composites, produced by Mapei. The aggregating additive transforms the RMC surplus into an aggregate that may be used to replace natural aggregates partially or completely for normal concrete, lean concrete, substrates, and mixed cements, for example.

The driver then operates 402 (see FIG. 4) the first user device 102 by inputting an amount of the RMC surplus to the first user device 102 via a user interface of the first user device 102. The driver may also input, via the user interface, a location of the RMC surplus (i.e. the location of the concrete truck 112), for example, in the form of an address of the first construction site where the concrete was delivered. Alternatively, if the first user device 102 comprises at least one position sensor configured to measure the position of the first user device 102, the first user device 102 may obtain its position, and thus the location of the RMC surplus, using the at least one position sensor. Example position sensors include satellite positioning sensors, such as Global Positioning System (GPS) sensors, but other position sensors known to the skilled person are also suitable.

After obtaining 200 (see FIG. 2) the above-described information on the RMC surplus, the first user device 102 generates an RMC recycling request based on the location of the RMC surplus and the amount of the RMC surplus. The first user device 102 transmits 202 (see FIG. 2) the RMC recycling request comprising the location and amount of the RMC surplus to the server 106 via the network 108. The server 106 receives 300 (see FIG. 3) the RMC recycling request and optionally stores the location and amount included in the request to the database.

The server computer 106 then searches 302 (see FIG. 3) the database using the location and the amount of the RMC surplus. Specifically, the server 106 searches the locations and amounts stored in the database based on received aggregate delivery requests, in this case including the aggregate delivery request received from the second user device 104. With the search, the server computer 106 looks for one or more aggregate delivery sites that are capable of receiving the RMC surplus converted into aggregate.

To determine which aggregate delivery sites are capable of receiving the RMC surplus both within a reasonable timeframe and with a limited environmental impact, the server 106 may compare the location of the RMC surplus to the locations of the aggregate delivery sites stored in the database. The server 106 may determine whether the location of the RMC surplus and the location of an aggregate delivery site (for example, site 114) are within a predetermined distance. The distance between the location of the RMC surplus and the location of the aggregate delivery site may be determined as an aerial distance or as a length of a route from the RMC surplus to the aggregate delivery site, for example. If the locations of the RMC surplus and the aggregate delivery site are within the predetermined distance, i.e. the distance between them is smaller than or equal to the predetermined distance, the server 106 may determine the aggregate delivery site as capable of receiving the RMC surplus. Else, if the locations of the RMC surplus and the aggregate delivery site are not within the predetermined distance, i.e. the distance between them is greater than the predetermined distance, the server 106 may determine the aggregate delivery site as incapable of receiving the RMC surplus. The predetermined distance may be e.g. 50 kilometres. By limiting the distance between the RMC surplus and the aggregate delivery site, the environmental impact of transporting the surplus to the site is also limited.

The predetermined distance may be larger in more sparsely populated areas, and/or smaller in more densely populated areas. The user may be allowed to set the predetermined distance to a suitable value e.g. using the first user device 102.

The server 106 may compare the amount of the RMC surplus of the RMC recycling request to the amounts of aggregate requested by the aggregate delivery sites stored in the database. The server 106 may perform a conversion from the amount of RMC surplus to a corresponding amount of aggregate, or from the amount of requested aggregate to a corresponding amount of RMC, for the comparison. If the amount of the RMC surplus is smaller than or equal to the amount of aggregate requested by an aggregate delivery site, i.e. the aggregate delivery site has sufficient capacity for receiving all of the surplus RMC, the server 106 may determine the aggregate delivery site as capable of receiving the RMC surplus. Else, if the amount of the RMC surplus is greater than the amount of aggregate requested by an aggregate delivery site, i.e. the aggregate delivery site does not have capacity for all of the surplus RMC, the server 106 may determine the aggregate delivery site as incapable of receiving the RMC surplus. By only allowing sites that can accept the whole RMC surplus of a single request, the environmental impact of transporting the surplus to multiple different sites is eliminated.

The server 106 selects only those aggregate delivery sites that are capable of receiving the RMC surplus converted into aggregate, preferably using one or both of the strategies described above. The server 106 transmits 306 (see FIG. 3) the location(s) of one or more such aggregate delivery sites to the first user device 102, optionally along with other information related to the one or more aggregate delivery sites that the server 106 retrieves 304 (see FIG. 3) from the database. The first user device 102 receives 204 (see FIG. 2) the information transmitted by the server 106, including the location(s) of the one or more aggregate delivery sites that are capable of receiving the RMC surplus.

When a plurality of aggregate delivery site locations are received by the first user device 102, the first user device 102 may select one of them based on distances between the location of the RMC surplus, the locations of the aggregate delivery sites, and a predetermined target location. Specifically, the distances between the predetermined target location and the one or more locations, and between the location of the RMC surplus and the one or more locations, may be evaluated by the first user device 102. The user device may select the aggregate delivery site such that the sum of the distance from the location of the RMC surplus to the location of the aggregate delivery site, and the distance from the location of the aggregate delivery site to the predetermined target location, is minimized. The first user device 102 may determine the above-mentioned distances as aerial distances, or preferably as route lengths between the relevant locations. The predetermined target location may be e.g. the location of a concrete plant from where the concrete truck 112 is to pick up a subsequent batch of concrete for delivery. The predetermined target location may be stored e.g. in a memory of the first user device 102. By selecting the aggregate delivery site using the relevant distances, emissions caused by the concrete truck that transports the RMC surplus are minimized.

The first user device 102 may compute route(s) from the location of the RMC surplus to the one or more locations of the one or more aggregate delivery sites, such as the location of the selected aggregate delivery site. The first user device 102 computes the routes based on the location of the RMC surplus and the one or more locations of the one or more aggregate delivery sites. The first user device 102 may further convert the computed route(s) to navigation instructions.

One or more of the steps for selecting the aggregate delivery site and/or computing the routes and/or navigation instructions that are performed by the first user device 102 in the above paragraphs may alternatively be performed by the server 106. When the server 106 selects the aggregate delivery site as described above, it may transmit the location of the selected delivery site only. As an alternative, the server 106 may transmit the locations of a plurality of suitable aggregate delivery sites, along with an indication of the selected aggregate delivery site. When the server 106 computes the route(s) and optionally further converts them to navigation instructions, it may transmit the route(s)/navigation instructions along with the location(s) of the (one or more) aggregate delivery site(s).

The first user device 102 outputs 206 (see FIG. 2) the one or more locations to the user via the user interface of the user device 102. When one or more routes or navigation instructions have been computed, they may also be output by the user device 102. When a single aggregate delivery site is selected as described above by the server 106 or by the user device 102, the user device 102 may output only the location of the selected aggregate delivery site, and/or the route and/or navigation instructions related to it. When the user device 102 has received a plurality of suitable aggregate delivery sites from the server 106, the user device 106 may alternatively output the locations of the plurality of aggregate delivery sites, along with an indication of the aggregate delivery site selected by the user device 102.

The user device 102 may prompt the user, i.e. the driver of the concrete truck 112, to confirm selection of an aggregate delivery site. The aggregate delivery site, such as the second construction site 114, may be pre-selected by the user device 102 or by the server 106 as described above. The user may confirm the selection by providing a user input via the user interface of the user device 102. In response to receiving the user input, the user device 102 may generate a confirmation message indicating which one of the one or more aggregate delivery sites was selected by the user of the user device 102. The user device 102 may then transmit the confirmation message to the server 106. The server 106 may receive the confirmation message, and decrease the amount of aggregate requested by the selected aggregate delivery site stored in the database by the amount of the RMC surplus in response to the message. This way, the server 106 keeps track that no more aggregate than what was requested by the site 114 is provided to the site 114, and thus no aggregate provided to the site will go to waste.

After obtaining the location of the (selected) aggregate delivery site 114 from the user device 102, and optionally also a route and/or navigation instructions to the site 114, the user is able to transport 404 (see FIG. 4) the RMC surplus (converted into aggregate) to the site 114. The second construction site 114 may utilize the RMC surplus converted into aggregate instead of natural aggregate to reduce the carbon footprint of the site, and the carbon dioxide (and other greenhouse gases) produced in making the RMC concrete is bound to the aggregate that is used at the second construction site 114.

When the aggregate obtained as described above is used to manufacture further ready-mix concrete, the properties of the resulting concrete have shown improvements compared to regular concrete. For example, concrete floors made using the aggregate have shown reduced shrinkage and cracking.

Further advantages of the invention include reduced environmental impacts of transporting the RMC concrete. A common practice in the construction industry is to order a batch of concrete that just fits the estimated demand of a construction site. However, occasionally the estimated demand is lower than the true demand, and another small batch of concrete has to be ordered to complete a pour. The invention allows for an environmentally friendly way of recycling excess concrete, and thus gives construction sites flexibility to order slightly larger batches of concrete, the excess of which may be recycled using the invention. This way, additional trips made by concrete delivery trucks and the emissions associated with them are avoided. This also speeds up the pours at the construction site as there is no need to wait for another batch of concrete to finish a pour.

Wide adoption of the invention within Finland is expected to reduce road traffic related to concrete or aggregate deliveries in city centers by 5 000 000 km. Further, atmospheric carbon dioxide (CO₂) is expected to be reduced by approximately 25 500 000 kg; per cubic meter of concrete, approx.120 kg of CO₂ are carbonated during the treatment process, and a further 50 kg of CO₂ emissions are avoided due to the reduced use of diesel fuel in road traffic.

FIG. 5 illustrates a block diagram that depicts embodiments of an apparatus 500. The apparatus 500 may be the first user apparatus 102, the second user apparatus 104, or the server computer 106 of FIG. 1. When the apparatus 500 is the first user device 102 (see FIG. 1), the apparatus is configured to perform the method of FIG. 2. When the apparatus 500 is the second user device 104 (see FIG. 1), the apparatus 500 is configured to perform the steps described prior to the example scenario, and/or the method of FIG. 2, as will be described in more detail further below. When the apparatus 500 is the server computer 106 (see FIG. 1), the apparatus 500 is configured to perform the method of FIG. 3.

The apparatus 500 comprises at least one processor 10, at least one memory 20 including computer program code 22, the at least one memory 20 and the computer program code 22 configured to, with the at least one processor 10, cause the apparatus 500 to perform the method of FIG. 2 or FIG. 3 or the steps as described above. The at least one processor 10 may include e.g. a central processing unit (CPU) and/or a graphics processing unit (GPU). The at least one memory 20 may include e.g. random access memory (RAM) and/or non-volatile memory. The apparatus 500 may further comprise a network interface 40 for transmitting and/or receiving messages via the network 108 (see FIG. 1).

When the apparatus 500 is the first user device 102 or the second user device 104 (see FIG. 1), the apparatus further comprises, or is coupled to, a user interface 60. The user interface 60 may comprise one or more input devices, such as a touchscreen, a keyboard, or a microphone, for providing user inputs to the apparatus 500. The user interface 60 may comprise one or more output devices, such as a display, a printer, a speaker, or a haptic output device, for outputting the one or more locations of the aggregate delivery site(s) and optionally the related route(s) and/or navigation instructions, and/or the prompt to confirm the selection of an aggregate delivery site.

When the apparatus 500 is the server computer 106 (see FIG. 1), the apparatus 500 may further comprise the database 24 stored in the at least memory 20 of the apparatus 500. Further description of the database 24 is omitted as it has already been provided when describing the operation of the server computer.

FIG. 5 further shows a computer program (product) stored on a computer-readable medium 30 comprising computer program code 22 configured to, when executed by the at least one processor 10, cause the apparatus 500 to perform the method of FIG. 2 or FIG. 3 as described above. The computer-readable medium 30 may be a non-transitory computer-readable medium.

Referring again to FIG. 1, the operations performed by the first user device 102 and the second user device 104 may be achieved by the same software. In other words, the first user device 102 and the second user device 104 may execute the same computer program 22 (see FIG. 5). However, different functions provided the computer program 22 may be used by different users of the devices as described herein.

If desired, the different functions discussed herein may be performed in a different order and/or concurrently with other. Furthermore, if desired, one or more of the above-described functions may be optional or may be combined.

## Claims

1. A method comprising:
obtaining (200) information on a recyclable ready-mix concrete, RMC, surplus, the information including a location of the recyclable RMC surplus and an amount of the recyclable RMC surplus:
transmitting (202) a RMC recycling request comprising the information of the recyclable RMC surplus to a server;
receiving (204), from the server, information on one or more aggregate delivery sites capable of receiving the recyclable RMC surplus converted into aggregate, the information including one or more locations of the one or more aggregate delivery sites;
selecting an aggregate delivery site from the one or more aggregate delivery sites capable of receiving the recyclable RMC surplus, based on distances between a predetermined target location and the one or more locations of the one or more aggregate delivery sites and between the location of the recyclable RMC surplus and the one or more locations of the one or more aggregate delivery sites; and
outputting the location of the selected aggregate delivery site.

2. The method of claim 1, further comprising:
computing, based on the location of the recyclable RMC surplus and the one or more locations of the one or more aggregate delivery sites, one or more routes from the location of the recyclable RMC surplus to the one or more locations of the one or more aggregate delivery sites; and
outputting the computed one or more routes.

3. The method of claim 1 or 2, further comprising:
measuring the location of the recyclable RMC surplus by at least one position sensor, and transmitting the measured location in the RMC recycling request.

4. A user device (102, 104) comprising at least one processor, at least one memory including computer program code, the at least one memory and the computer program code configured to, with the at least one processor, cause the user device to perform the method of any one of claims 1 to 3.

5. A computer program product comprising computer program code configured to, when executed by at least one processor, cause an apparatus to perform the method of any one of claims 1 to 3.

6. A system for ready-mix concrete, RMC, recycling, the system comprising one or more user devices (102, 104) according to claim 4 and at least one server (106),
wherein the server (106) comprises at least one processor (10), at least one memory (20) including computer program code (22), the at least one memory and the computer program code of the server configured to, with the at least one processor of the server, cause the server to perform:
receiving (300), from a user device, a RMC recycling request comprising information on a recyclable RMC surplus, the information including a location of the recyclable RMC surplus and an amount of the recyclable RMC surplus:
searching (302), using the location of the recyclable RMC surplus and the amount of the recyclable RMC surplus, a database (24) for one or more aggregate delivery sites capable of receiving the recyclable RMC surplus converted into aggregate, wherein the database is configured to store locations of aggregate delivery sites and amounts of aggregate requested by the aggregate delivery sites;
retrieving (304) information of the one or more aggregate delivery sites from the database; and
transmitting (306) the information on the one or more aggregate delivery sites to the user device, the information including the locations of the one or more aggregate delivery sites.

7. The system of claim 6, wherein the at least one memory and the computer program code of the server (106) are further configured to, with the at least one processor of the server, cause the server to perform:
receiving an aggregate delivery request comprising a location of an aggregate delivery site and an amount of aggregate requested;
storing the location of the aggregate delivery site and the amount of aggregate requested in the database (24).

8. The system of claim 6 or 7, wherein the at least one memory and the computer program code of the server (106) are further configured to, with the at least one processor of the server, cause the server to perform:
comparing the location of the recyclable RMC surplus to the locations of the aggregate delivery sites stored in the database; and
if the location of the recyclable RMC surplus and the location of an aggregate delivery site are not within a predetermined distance, determining the aggregate delivery site as incapable of receiving the recyclable RMC surplus.

9. The system of any one of claims 6 to 8, wherein the at least one memory and the computer program code of the server (106) are further configured to, with the at least one processor of the server, cause the server to perform:
comparing the amount of the recyclable RMC surplus to the amounts of aggregate requested by the aggregate delivery sites stored in the database (24); and
if the amount of the recyclable RMC surplus is greater than the amount of aggregate requested by an aggregate delivery site, determining the aggregate delivery site as incapable of receiving the recyclable RMC surplus.

10. The system of any one of claims 6 to 9, wherein the at least one memory and the computer program code of the server (106) are further configured to, with the at least one processor of the server, cause the server to perform:
receiving, from the user device, a confirmation message indicating which one of the one or more aggregate delivery sites was selected by a user of the user device;
in response to receiving the confirmation message, decreasing the amount of aggregate requested by the selected aggregate delivery site stored in the database (24) by the amount of the recyclable RMC surplus.

11. A method for recycling ready-mix concrete, RMC, the method comprising:
treating (400) a recyclable RMC surplus with an aggregating additive to convert the recyclable RMC surplus into aggregate;
operating (402) a user device (102, 104) according to claim 4 by providing at least an amount of the recyclable RMC surplus to the user device to obtain a location an aggregate delivery site from the user device; and
transporting (404) the aggregate to the location of the aggregate delivery site.

## Patentansprüche

1. Verfahren, das Folgendes umfasst:
erhalten (200) von Informationen über einen wiederverwertbaren Transportbetonüberschuss, RMC, wobei die Informationen einen Standort des wiederverwertbaren RMC-Überschusses und eine Menge des wiederverwertbaren RMC-Überschusses umfassen, Übertragen (202) einer RMC-Recyclinganforderung, die die Informationen über den wiederverwertbaren RMC-Überschuss enthält, an einen Server;
empfangen (204) von Informationen über eine oder mehrere Lieferstellen für Zuschlagstoffe, die in der Lage sind, den in Zuschlagstoffe umgewandelten wiederverwertbaren RMC-Überschuss zu empfangen, wobei die Informationen einen oder mehrere Standorte der einen oder mehreren Lieferstellen für Zuschlagstoffe enthalten;
auswählen einer Lieferstelle für Zuschlagstoffe aus der einen oder den mehreren Lieferstellen für Zuschlagstoffe, die in der Lage sind, den wiederverwertbaren RMC-Überschuss aufzunehmen, basierend auf Entfernungen zwischen einem vorbestimmten Zielort und dem einen oder den mehreren Standorten der einen oder mehreren Lieferstellen für Zuschlagstoffe und zwischen dem Standort des wiederverwertbaren RMC-Überschusses und dem einen oder den mehreren Standorten der einen oder mehreren Lieferstellen für Zuschlagstoffe; und
Ausgabe des Standorts der ausgewählten Lieferstelle für Zuschlagstoffe.

2. Verfahren nach Anspruch 1, welches ferner Folgendes umfasst:
Berechnen, basierend auf dem Standort des wiederverwertbaren RMC-Überschusses und dem einen oder den mehreren Standorten der einen oder der mehreren Lieferstellen für Zuschlagstoffe, einer oder mehrerer Routen von dem Standort des wiederverwertbaren RMC-Überschusses zu dem einen oder den mehreren Standorten der einen oder der mehreren Lieferstellen für Zuschlagstoffe; und Ausgeben der berechneten einen oder mehreren Routen.

3. Verfahren nach Anspruch 1 oder 2, welches ferner Folgendes umfasst:
Messung der Position des wiederverwertbaren RMC-Überschusses durch mindestens einen Positionssensor und Übermittlung der gemessenen Position in der RMC-Wiederverwertungsanforderung.

4. Benutzergerät (102, 104) mit mindestens einem Prozessor, mindestens einem Speicher mit Computerprogrammcode, wobei der mindestens eine Speicher und der Computerprogrammcode so konfiguriert sind, dass sie mit dem mindestens einen Prozessor das Benutzergerät veranlassen, das Verfahren nach einem der Ansprüche 1 bis 3 durchzuführen.

5. Computerprogrammprodukt, das einen Computerprogrammcode umfasst, der so konfiguriert ist, dass er, wenn er von mindestens einem Prozessor ausgeführt wird, eine Vorrichtung veranlasst, das Verfahren nach einem der Ansprüche 1 bis 3 durchzuführen.

6. System für die Wiederverwertung von Transportbeton, RMC, wobei das System ein oder mehrere Benutzergeräte (102, 104) nach Anspruch 4 und mindestens einen Server (106) umfasst, wobei der Server (106) mindestens einen Prozessor (10), mindestens einen Speicher (20) mit Computerprogrammcode (22) umfasst, wobei der mindestens eine Speicher und der Computerprogrammcode des Servers so konfiguriert sind, dass sie zusammen mit dem mindestens einen Prozessor des Servers den Server zur Ausführung Folgendes veranlassen:
Empfangen (300) einer RMC-Wiederverwertungsanforderung von einem Benutzergerät, die Informationen über einen wiederverwertbaren RMC-Überschuss umfasst, wobei die Informationen einen Standort des wiederverwertbaren RMC-Überschusses und eine Menge des wiederverwertbaren RMC-Überschusses enthalten;
Durchsuchen (302) einer Datenbank (24) nach einer oder mehreren Lieferstellen für Zuschlagstoffe, die in der Lage sind, den in Zuschlagstoff umgewandelten wiederverwertbaren RMC-Überschuss zu empfangen, unter Verwendung des Standortes des wiederverwertbaren RMC-Überschusses und der Menge des wiederverwertbaren RMC-Überschusses, wobei die Datenbank so konfiguriert ist, dass sie Standorte von Lieferstellen für Zuschlagstoffe und von den Lieferstellen für Zuschlagstoffe angeforderte Zuschlagstoffmengen speichert;
Abrufen (304) von Informationen über den einen oder die mehreren Lieferstellen für Zuschlagstoffe aus der Datenbank; und
Übertragen (306) der Informationen über die eine oder die mehreren Lieferstellen für Zuschlagstoffe an das Benutzergerät, wobei die Informationen die Standorte der einen oder der mehreren Lieferstellen für Zuschlagstoffe enthalten.

7. System nach Anspruch 6, wobei der mindestens eine Speicher und der Computerprogrammcode des Servers (106) ferner so konfiguriert sind, dass sie zusammen mit dem mindestens einen Prozessor des Servers den Server veranlassen, Folgendes auszuführen:
Empfang einer Anforderung zur Lieferung von Zuschlagstoffen, die einen Standort der Lieferstelle für Zuschlagstoffe und eine angeforderte Menge an Zuschlagstoffen enthält;
Speicherung des Standorts der Lieferstelle für Zuschlagstoffe und der angeforderten Zuschlagstoffmenge in der Datenbank (24).

8. System nach Anspruch 6 oder 7, wobei der mindestens eine Speicher und der Computerprogrammcode des Servers (106) ferner so konfiguriert sind, dass sie zusammen mit dem mindestens einen Prozessor des Servers den Server veranlassen, Folgendes auszuführen:
vergleichen des Standortes des wiederverwertbaren RMC-Überschusses mit den Standorten der in der Datenbank gespeicherten Lieferstellen für Zuschlagstoffe; und wenn der Standort des wiederverwertbaren RMC-Überschusses und der Standort einer Lieferstellenfür Zuschlagstoffe nicht innerhalb einer vorbestimmten Entfernung liegen, Bestimmen der Lieferstelle für Zuschlagstoffe als unfähig, den wiederverwertbaren RMC-Überschuss aufzunehmen.

9. System nach einem der Ansprüche 6 bis 8, wobei der mindestens eine Speicher und der Computerprogrammcode des Servers (106) ferner so konfiguriert sind, dass sie zusammen mit dem mindestens einen Prozessor des Servers den Server veranlassen, Folgendes auszuführen:
vergleichen der Menge des wiederverwertbaren RMC-Überschusses mit den von den in der Datenbank (24) gespeicherten Lieferstellen für Zuschlagstoffe angeforderten Zuschlagstoffmengen; und wenn die Menge des wiederverwertbaren RMC-Überschusses größer ist als die von einer Lieferstelle für Zuschlagstoffe angeforderte Zuschlagstoffmengen, Bestimmen der Lieferstelle für Zuschlagstoffe als unfähig, den wiederverwertbaren RMC-Überschuss zu empfangen.

10. System nach einem der Ansprüche 6 bis 9, wobei der mindestens eine Speicher und der Computerprogrammcode des Servers (106) ferner so konfiguriert sind, dass sie zusammen mit dem mindestens einen Prozessor des Servers den Server veranlassen, Folgendes auszuführen:
Empfangen einer Bestätigungsnachricht von dem Benutzergerät, die anzeigt, welche der einen oder mehreren Lieferstellen für Zuschlagstoffe von einem Benutzer des Benutzergeräts ausgewählt wurde;
als Reaktion auf den Empfang der Bestätigungsnachricht die von der ausgewählten Lieferstelle für Zuschlagstoffe angeforderte und in der Datenbank (24) gespeicherte Menge an Zuschlagstoffen um die Menge des wiederverwertbaren RMC-Überschusses zu verringern.

11. Verfahren zur Wiederverwertung von Transportbeton, RMC, wobei das Verfahren Folgendes umfasst:
Behandlung (400) eines wiederverwertbaren RMC-Überschusses mit einem Zuschlagsstoff, um den wiederverwertbaren RMC-Überschuss in einen Zuschlagstoff umzuwandeln;
Betreiben (402) eines Benutzergerätes (102, 104) nach Anspruch 4 durch Bereitstellen mindestens einer Menge des wiederverwertbaren RMC-Überschusses an das Benutzergerät, um einen Standort für eine Lieferstelle für Zuschlagstoffe von dem Benutzergerät zu erhalten; und
Transport (404) des Zuschlagstoffs zum Standort der Lieferstelle für Zuschlagstoffe.

## Revendications

1. Procédé comprenant :
l'obtention (200) d'informations sur un surplus de béton prêt à l'emploi, BPE, recyclable, les informations comportant un emplacement du surplus de BPE recyclable et une quantité du surplus de BPE recyclable ;
la transmission (202) d'une demande de recyclage de BPE comprenant les informations du surplus de BPE recyclable à un serveur ;
la réception (204), à partir du serveur, d'informations sur un ou plusieurs sites de livraison d'agrégats capables de recevoir le surplus de BPE recyclable converti en agrégats, les informations comportant un ou plusieurs emplacements de l'un ou plusieurs sites de livraison d'agrégats ;
la sélection d'un site de livraison d'agrégats parmi l'un ou plusieurs sites de livraison d'agrégats capables de recevoir le surplus de BPE recyclable, sur la base des distances entre un emplacement cible prédéterminé et l'un ou plusieurs emplacements de l'un ou plusieurs sites de livraison d'agrégats et entre l'emplacement du surplus de BPE recyclable et l'un ou plusieurs emplacements de l'un ou plusieurs sites de livraison d'agrégats ; et
la génération de l'emplacement du site de livraison d'agrégats sélectionné.

2. Procédé selon la revendication 1, comprenant en outre :
le calcul, sur la base de l'emplacement du surplus de BPE recyclable et de l'un ou de plusieurs emplacements de l'un ou plusieurs sites de livraison d'agrégats, d'un ou plusieurs itinéraires à partir de l'emplacement du surplus de BPE recyclable vers l'un ou plusieurs emplacements de l'un ou plusieurs sites de livraison d'agrégats ; et
la génération de l'un ou plusieurs itinéraires calculés.

3. Procédé selon la revendication 1 ou 2, comprenant en outre :
la mesure de l'emplacement du surplus de BPE recyclable par au moins un capteur de position, et la transmission de l'emplacement mesuré dans la demande de recyclage de BPE.

4. Dispositif utilisateur (102, 104) comprenant au moins un processeur, au moins une mémoire comportant un code de programme informatique, l'au moins une mémoire et le code de programme informatique configurés pour, avec l'au moins un processeur, amener le dispositif utilisateur à réaliser le procédé selon l'une quelconque des revendications 1 à 3.

5. Produit de programme informatique comprenant un code de programme informatique configuré pour, lorsqu'il est exécuté par au moins un processeur, amener un appareil à réaliser le procédé selon l'une quelconque des revendications 1 à 3.

6. Système permettant le recyclage du béton prêt à l'emploi, BPE, le système comprenant un ou plusieurs dispositifs utilisateurs (102, 104) selon la revendication 4 et au moins un serveur (106), dans lequel le serveur (106) comprend au moins un processeur (10), au moins une mémoire (20) comportant un code de programme informatique (22), l'au moins une mémoire et le code de programme informatique du serveur configurés pour, avec l'au moins un processeur du serveur, amener le serveur à réaliser :
la réception (300), à partir d'un dispositif utilisateur, d'une demande de recyclage de BPE comprenant des informations sur un surplus de BPE recyclable, les informations comportant un emplacement du surplus de BPE recyclable et une quantité du surplus de BPE recyclable :
la recherche (302), à l'aide de l'emplacement du surplus de BPE recyclable et de la quantité du surplus de BPE recyclable, d'une base de données (24) pour un ou plusieurs sites de livraison d'agrégats capables de recevoir le surplus de BPE recyclable converti en agrégats, dans lequel la base de données est configurée pour stocker les emplacements des sites de livraison d'agrégats et les quantités d'agrégats demandées par les sites de livraison d'agrégats ;
la récupération (304) d'informations de l'un ou plusieurs sites de livraison d'agrégats à partir de la base de données ; et
la transmission (306) des informations sur l'un ou plusieurs sites de livraison d'agrégats au dispositif utilisateur, les informations comportant les emplacements de l'un ou plusieurs sites de livraison d'agrégats.

7. Système selon la revendication 6, dans lequel l'au moins une mémoire et le code de programme informatique du serveur (106) sont en outre configurés pour, avec l'au moins un processeur du serveur, amener le serveur à réaliser :
la réception d'une demande de livraison d'agrégats comprenant un emplacement d'un site de livraison d'agrégats et une quantité d'agrégats demandée ;
le stockage de l'emplacement du site de livraison d'agrégats et de la quantité d'agrégats demandée dans la base de données (24).

8. Système selon la revendication 6 ou 7, dans lequel l'au moins une mémoire et le code de programme informatique du serveur (106) sont en outre configurés pour, avec l'au moins un processeur du serveur, amener le serveur à réaliser :
la comparaison de l'emplacement du surplus de BPE recyclable aux emplacements des sites de livraison d'agrégats stockés dans la base de données ; et
si l'emplacement du surplus de BPE recyclable et l'emplacement d'un site de livraison d'agrégats ne se trouvent pas à une distance prédéterminée, la détermination du site de livraison d'agrégats comme incapable de recevoir le surplus de BPE recyclable.

9. Système selon l'une quelconque des revendications 6 à 8, dans lequel l'au moins une mémoire et le code de programme informatique du serveur (106) sont en outre configurés pour, avec l'au moins un processeur du serveur, amener le serveur à réaliser :
la comparaison de la quantité de surplus de BPE recyclable aux quantités d'agrégats demandées par les sites de livraison d'agrégats stockées dans la base de données (24) ; et si la quantité de surplus de BPE recyclable est supérieure à la quantité d'agrégats demandée par un site de livraison d'agrégats, la détermination du site de livraison d'agrégats comme incapable de recevoir le surplus de BPE recyclable.

10. Système selon l'une quelconque des revendications 6 à 9, dans lequel l'au moins une mémoire et le code de programme informatique du serveur (106) sont en outre configurés pour, avec l'au moins un processeur du serveur, amener le serveur à réaliser :
la réception, à partir du dispositif utilisateur, d'un message de confirmation indiquant lequel parmi l'un ou plusieurs sites de livraison d'agrégats a été sélectionné par un utilisateur du dispositif utilisateur ;
en réponse à la réception du message de confirmation, la diminution de la quantité d'agrégats demandée par le site de livraison d'agrégats sélectionné stocké dans la base de données (24) de la quantité du surplus de BPE recyclable.

11. Procédé permettant le recyclage du béton prêt à l'emploi, BPE, le procédé comprenant :
le traitement (400) d'un surplus de BPE recyclable avec un additif d'agrégation afin de convertir le surplus de BPE recyclable en agrégats ;
l'exploitation (402) d'un dispositif utilisateur (102, 104) selon la revendication 4 en fournissant au moins une quantité du surplus de BPE recyclable au dispositif utilisateur afin d'obtenir un emplacement d'un site de livraison d'agrégats à partir du dispositif utilisateur ; et
le transport (404) des agrégats jusqu'au site de livraison d'agrégats.
